# EUROPEAN PATENT SPECIFICATION

(11) **EP 3 461 694 B1**
(45) Date of publication and mention of the grant of the patent: **20.05.2020**
(21) Application number: 18178110.5
(22) Date of filing: 15.06.2018
(51) Int. Cl.: B60R 21/13

(54) **WORK MACHINE**
ARBEITSMASCHINE
MACHINE DE TRAVAIL

(30) Priority: 28.09.2017 JP 2017188353
(43) Date of publication of application: 03.04.2019
(73) Proprietor: Kubota Corporation, Osaka-shi, Osaka 556-8601 (JP)
(72) Inventor: KANAI, Toshiki, Sakai-shi, Osaka 5900823 (JP); NAGAISHI, Shoichiro, Sakai-shi, Osaka 5900823 (JP); AKITA, Masayuki, Sakai-shi, Osaka 5900823 (JP); KIMURA, Arisa, Sakai-shi, Osaka 5900823 (JP); MIYAGUCHI, Kazutomo, Sakai-shi, Osaka 5900823 (JP)
(74) Representative: Cabinet Beau de Loménie

(56) References cited:
- JP-A- S61 143 243
- JP-U- S5 625 674

## Description

### BACKGROUND OF THE INVENTION

### 1. Field of the Invention

The present invention relates to a work machine that includes a rollover protection structure (referred to as "ROPS" hereinafter) that has a gate shape when viewed in a front-rear direction of a vehicle body.

### 2. Description of the Related Art

Conventionally, work machines that include a ROPS with a gate shape when viewed in the front-rear direction include those that have structures described in [1] and [2] below.
[1] A work machine that has vertical column portions of a ROPS on the left and right sides of an operator seat, and has an integrally formed structure with a shape in which an arch-like upper frame portion that connects upper ends of the vertical column portions is curved forward (e.g. see JP 2014-015168A).
[2] A work machine that has vertical column portions of a ROPS on the left and right sides of an operator seat, and has a structure in which an arch-like upper frame portion, which is a separate member and connects upper ends of the vertical column portions, is connected so that its orientation can be changed backwards and forwards around an axis extending in the left-right direction (e.g. see JP 2017-109567A or counterpart US 2017/0166154A1).

In both work machines described in JP 2014-015168A and JP 2017-109567A (US 2017/0166154A1), the vertical column portions are formed to have a structure in which the vertical column portions stand upright when viewed in a side view, and are not bent in the front-rear direction. In this structure, the vertical column portions of the ROPS are intentionally formed to stand upright without being bent so as to be unlikely to bend and deform even when subjected to a large load in the up-down direction. Meanwhile, there are cases where, due to a positional relationship or the like between the operator seat and the positions at which the vertical column portions are connected to a body frame, the vertical column portions assume a more appropriate attachment orientation with intermediate regions thereof in the up-down direction bent in the front-rear direction to some extent.

However, if the intermediate regions in the up-down direction of the vertical column portions, which are constituted by square pipe materials, are bent in the front-rear direction, the bent portions are likely to bulge in a lateral direction, i.e. left-right direction, and also tend to be unfavorable in terms of appearance and strength, and thus there is room for improvement in regards to this point.

The present invention aims to suppress degradation of appearance and strength when bending intermediate regions located in the up-down direction of the vertical column portions to some extent in the case of providing a ROPS using square pipe materials.

### SUMMARY OF THE INVENTION

In view of the foregoing situation, the following work machine is proposed.

A work machine comprising:
a body frame that is supported against a ground surface by a front wheel and a rear wheel;
a boarding operation unit that has an operator seat provided on the body frame; and
a ROPS (rollover protection structure) that is installed standing upright on the body frame in the boarding operation unit and has a gate shape when viewed in a front-rear direction, wherein the ROPS includes a pair of left and right vertical column portions, and each of the vertical column portions is constituted by a square pipe material having a rectangular cross section, and has a curved portion at which an upper portion of the vertical column portion is bent forward relative to a lower portion thereof, the curved portion being formed at an intermediate position in an up-down direction of the vertical column portion; and
reinforcing bodies each of which spans the upper portion on an upper side of the curved portion and the lower portion on a lower side of the curved portion, wherein each of the reinforcing bodies includes a first reinforcing member that is fitted from a lateral side of a corresponding one of the vertical column portions and has a channel-shaped cross section, a second reinforcing member that has an L-shaped cross section having a face parallel to the front-rear direction of the first reinforcing member, and a face parallel to a left-right direction on a front side or a rear side of the first reinforcing member, and a third reinforcing member having a flat plate shape that intersects the face of the second reinforcing member parallel to the left-right direction and covers an opening side of the channel-shaped cross section of the first reinforcing member.

With this configuration, the bent portion is formed at which the upper portion of each vertical column portion is bent forward relative to the lower portion, and the reinforcing body spans the upper side and the lower side of the bent portion. The first reinforcing member of the reinforcing body that is fitted from a lateral side of the vertical column portion and has a channel-shaped cross section increases the thickness of the vertical column portion in the front-rear direction, and also increases the thickness thereof on the lateral outer side, at upper and lower positions of the curved portion.

Furthermore, the second reinforcing member that has an L-shaped cross section having a face parallel to the front-rear direction of the first reinforcing member, and a face parallel to the left-right direction on the front side or the rear side of the first reinforcing member, and the third reinforcing member having a flat-plate shape that intersects the face of the second reinforcing member parallel to the left-right direction and covers an opening side of the channel-shaped cross section of the first reinforcing member increase the thickness of the vertical column portion in the left-right direction, and also support the curved portion while enveloping the curved portion from the left and right sides.

Thus, even if both left and right side faces of each vertical column portion parallel to the front-rear direction slightly bulge in the left and right direction in the region where the curved portion is present, the reinforcing members function as insulating plates that envelop and cover the entire bulging portion. Accordingly, there is no concern of deterioration of the appearance.

In addition, since regions above and below the curved portion, as well as the region around the curved portion are reinforced with an increased thickness due to the presence of the reinforcing members, a decrease in the strength of the vertical column portions in the up-down direction can be suppressed even if the vertical column portion is slightly bent in the front-rear direction.

In the above configuration, it is favorable that the first reinforcing member is constituted by two members that are divided between the upper side and the lower side of the curved portion.

With this configuration, the first reinforcing member itself, which is present on the upper and lower sides of the curved portion, does not need to be bent. This configuration is advantageous in that a decrease in processing accuracy due to bending can be suppressed.

In the above configuration, it is preferable that, out of left and right end portions of the face of the second reinforcing member parallel to the left-right direction, an end portion that is distant from the face parallel to the front-rear direction is located farther from the face of the first reinforcing member parallel to the front-rear direction than an end portion, on the same side, of the face of the first reinforcing member parallel to the left-right direction, or than a side face of the corresponding vertical column portion, the side face being located on an opening side of the channel-shaped cross section of the first reinforcing member.

With this configuration, even if, in the curved portion of each vertical column portion, which is constituted by a square pipe material, faces that are parallel to the front-rear direction bulge somewhat unevenly in the left-right direction, the third reinforcing member can be fixed to the second reinforcing member while being reliably placed on the face of the vertical column portion parallel to the front-rear direction.

That is to say, if the second reinforcing member and the third reinforcing member are integrally formed to have a U shape in advance, it is difficult to attach the second reinforcing member and the third reinforcing member to the curved portion even when the faces of the vertical column portion parallel to the front-rear direction bulge in the left-right direction only slightly unevenly. Meanwhile, according to this invention, the second reinforcing member and the third reinforcing member are formed as separate members, and the position at which the third reinforcing member is fixed to the second reinforcing member can be adjusted. Accordingly, a versatile reinforcement structure can be readily achieved.

Further features and advantages achieved thereby will be apparent from the following descriptions.

### BRIEF DESCRIPTION OF THE DRAWINGS

FIG. 1 is an overall side view of a boarding-type mowing machine.
FIG. 2 is an overall plan view of the boarding-type mowing machine.
FIG. 3 is a perspective view showing an entire ROPS.
FIG. 4 is a left side view showing a vertical column portion.
FIG. 5 is a cross-sectional view taken along a line V-V in FIG. 4.
FIG. 6 is a cross-sectional view taken along a line VI-VI in FIG. 4.
FIG. 7 illustrates a method of attaching a reinforcing body to the vertical column portion.

### DETAILED DESCRIPTION OF PREFERRED EMBODIMENTS

Hereinafter, an embodiment of the present invention will be described based on the drawings.

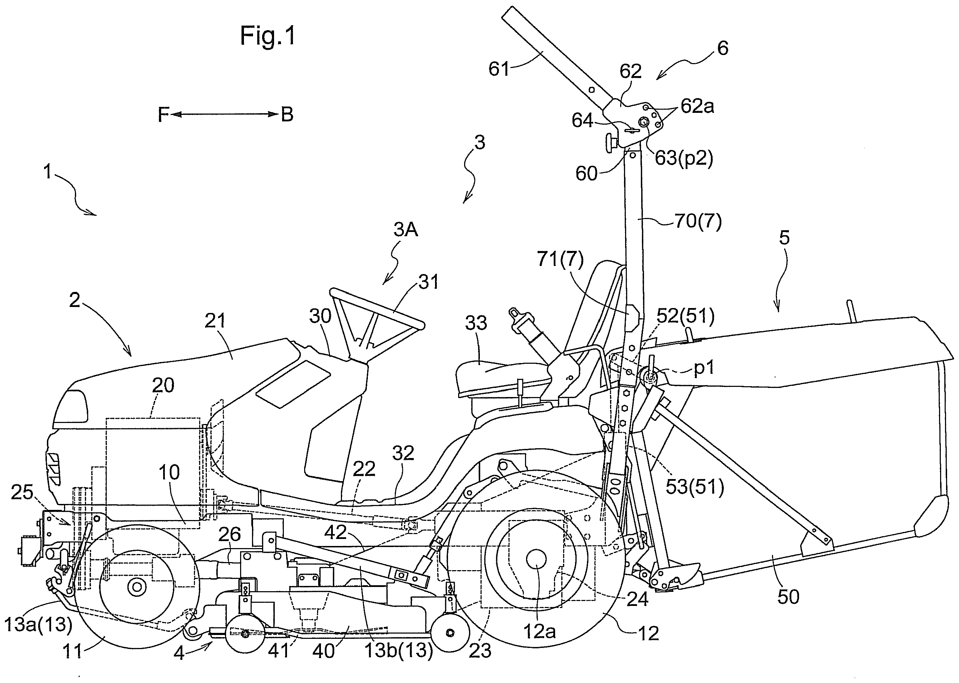

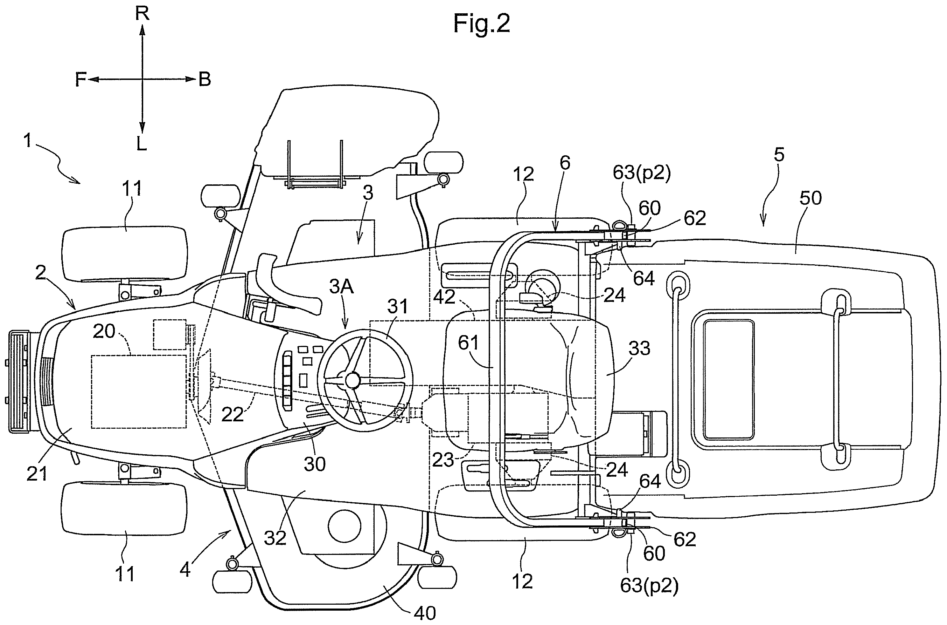

Note that the front-rear direction and the left-right direction in the description of this embodiment are described as follows, unless otherwise stated. That is to say, "front" refers to a forward travelling direction (see the arrow F in FIG. 1) when a boarding-type mowing machine to which the present invention is applied travels to perform work, "rear" refers to the direction (see the arrow B in FIG. 1) in which the tractor travels backward, "right" refers to the direction (see the arrow R in FIG. 2) corresponding to the right side with the forward posture relative to this front-rear direction serving as a reference, and "left" refers to the direction (see the arrow L in FIG. 2) corresponding to the left side relative thereto.

### Overall configuration of work machine

FIG. 1 shows an overall side face of a boarding-type mowing machine, which is an example of a work machine, and FIG. 2 shows an overall plan view thereof. This boarding-type mowing machine has a pair of left and right steerable front wheels 11 on the front side of a body frame 10 of a travelling body 1, and a pair of left and right drivable rear wheels 12 on the rear side, and thus can travel by itself.

A rear-discharge mower apparatus 4 is mounted in a suspended manner between the front wheels 11 and the rear wheel 12 in the front-rear direction and below the body frame 10, so as to be able to be raised and lowered. A grass collection apparatus 5 for collecting grass mown by the mower apparatus 4 is provided on the rear side of the travelling body 1.

As shown in FIGS. 1 and 2, a motor unit 2 is provided in a front portion of the body frame 10 of the travelling body 1, and a boarding operation unit 3 is provided rearward of the motor unit 2.

In the motor unit 2, an engine 20 is mounted on the body frame 10 while being contained in an engine hood 21. Motive power is output from the rear side of the engine 20 to a driving system for the rear wheels 12, and so on. That is to say, motive power taken from the engine 20 is input to a transmission case 23, which is located at a rear position, via a main transmission shaft 22, and motive power that has been subjected to speed change in the transmission case 23 is transmitted to rear axles 12a, which are supported by rear axle cases 24, and the rear wheels 12 are thus driven.

Motive power for work can be taken from the front side of the engine 20. That is to say, a power take-off mechanism 25, which is constituted by a belt transmission mechanism, is provided on the front side of the engine 20, and motive power from the engine 20 is transmitted to the mower apparatus 4 via a PTO shaft 26 provided in the power take-off mechanism 25.

A steering panel 30 that is continuous with the rear side of the engine hood 21, and a steering unit 3A that includes a steering wheel 31 and so on, are provided in the boarding operation unit 3 rearward of the motor unit 2. An operator seat 33 is installed above a boarding step 32 located at a foot position on the rear side of the steering unit 3A, and a ROPS 6 is installed standing upright in a region rearward of the operator seat 33.

The mower apparatus 4 has a housing 40 that is supported in a suspended manner so as to be able to be raised and lowered relative to the body frame 10, via a link mechanism 13 that includes a pair of left and right front links 13a and a pair of left and right rear links 13b.

A pair of left and right rotary blades 41 are arranged within the housing 40. The rotary blades 41 rotate around a vertical shaft, and are driven to rotate at a constant speed in a state where the rotation trajectories thereof partially overlap each other. Thus, grass is mowed, and the mowed grass is discharged rearward from a discharge port (not shown) that is formed in a rear portion of the housing 40, using a conveying wind generated by the rotational movement of the rotary blades 41.

As shown in FIGS. 1 and 2, the grass collection apparatus 5 includes a grass collection container 50 for containing mown grass, and an open-close operation mechanism 51 for operating the grass collection container 50 so as to enable an operation to discharge mown grass.

The grass collection container 50 has, on the front end side, a receiving port (not shown) for receiving mown grass that is fed from the mower apparatus 4 via a conveyance duct 42, and is supported so as to be able to pivot up and down around a rotation axis p1 extending parallel to the left-right direction in an upper portion on the front end side.

The open-close operation mechanism 51 includes a pivot arm 52 that is attached to the grass collection container 50 so as to be able to pivot around the rotation axis p1, and a hydraulic cylinder 53 for opening and closing operations. The grass collection container 50 operates to pivot up and down around the rotation axis p1 in accordance with extending and retracting operations of the hydraulic cylinder 53, and is operated to assume a forward inclined discharging orientation in which the rear end side of the grass collection container 50 is raised, as per a discharging operation in which the hydraulic cylinder 53 is retracted. In this state, mown grass accumulated in the grass collection container 50 can be discharged from the receiving port provided on the front end side.

### ROPS

A description will be given of the ROPS 6 provided in a portion rearward of the boarding operation unit 3.

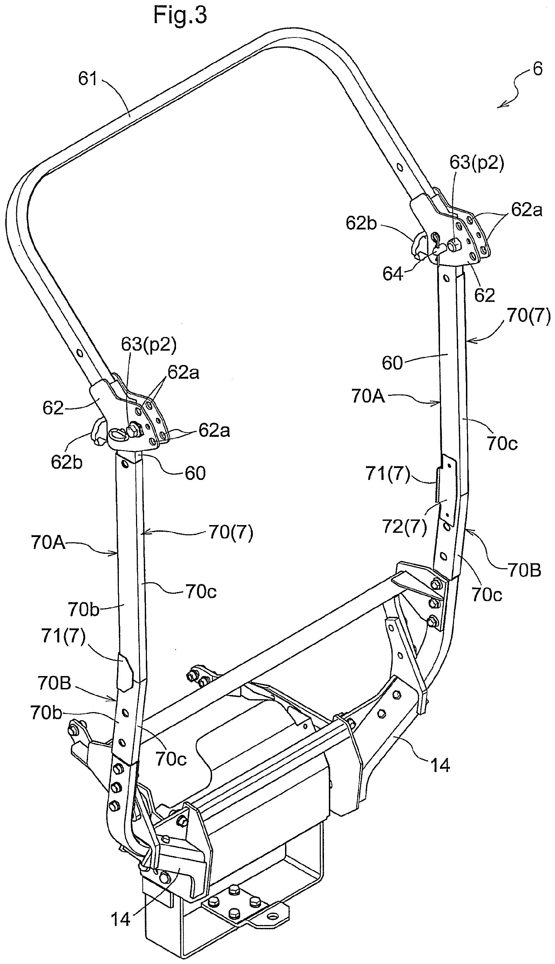

As shown in FIGS. 1 to 3, the ROPS 6 includes a pair of left and right vertical column portions 60 that are connected and fixed to a pair of left and right ROPS fixing portions 14 (see FIG. 3), which are provided in a rear end portion of the body frame 10, in a rear portion of the operator seat 33, and an upper frame portion 61 that has an arch shape and connects upper end portions of the left and right vertical column portions 60 to each other, and is formed to have a gate shape when viewed in the front-rear direction.

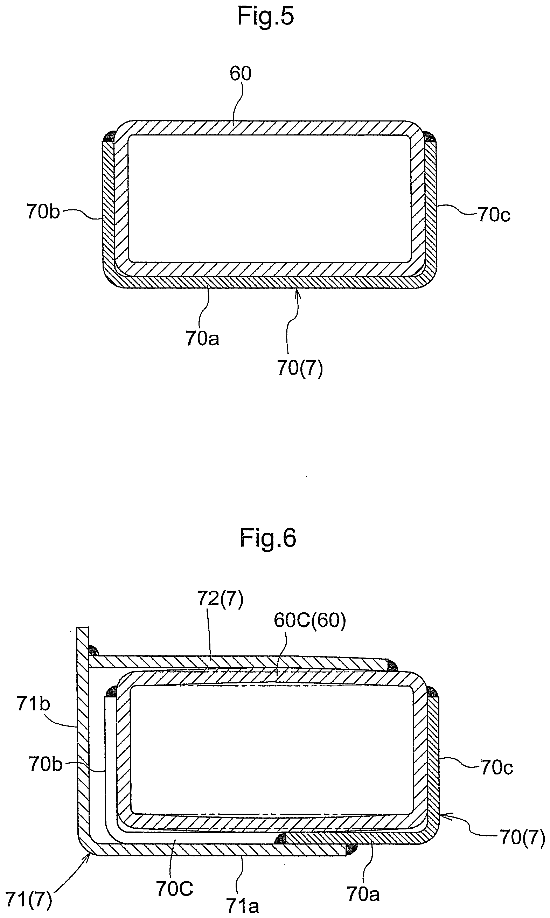

In the ROPS 6, the vertical column portions 60 and the upper frame portion 61 are constituted by square pipe materials that have a rectangular cross section that is longer in the front-rear direction than in the left-right direction, as shown in FIGS. 5 and 6. Although only the cross section of a vertical column portion 60 is shown in FIGS. 5 and 6, the upper frame portion 61 is also constituted by a square pipe material with a similar cross section.

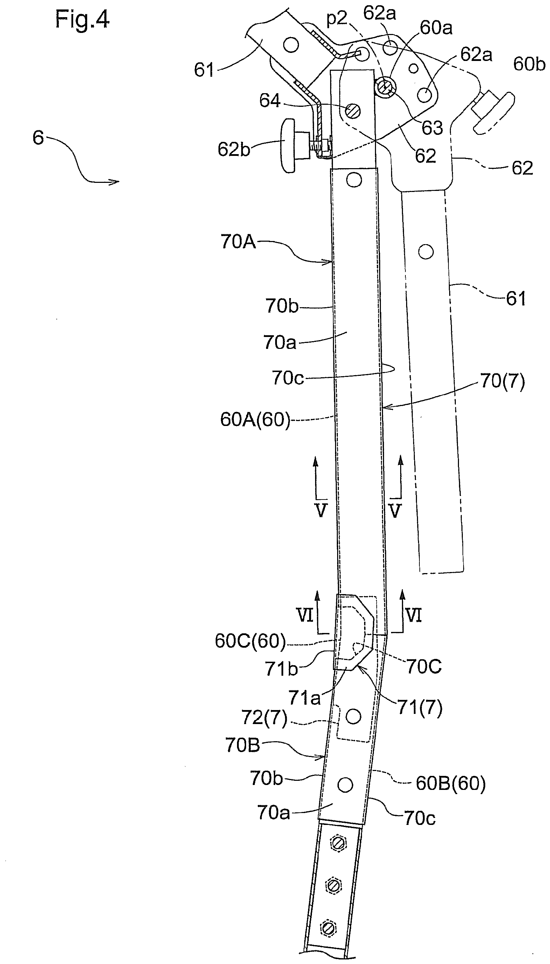

As shown in FIGS. 3 and 4, a connecting plate 62 is integrally welded and connected to each end portion of the upper frame portion 61 on the side at which the upper frame portion 61 is connected to the vertical column portions 60. A connecting bolt 63 is inserted into a cylindrical boss 60a that is provided at an upper end portion of each vertical column portion 60, and thus, the orientation of the connecting plate 62 can change around an axis p2 of the connecting bolt 63.

Through-holes 60b and 62a are formed respectively in the upper end portion of each vertical column portion 60 and the connecting plate 62 of the upper frame portion 61. Each vertical column portion 60 and the upper frame portion 61 can be connected in a predetermined connecting orientation by matching the through-hole 60b at the upper end portion of the vertical column portion 60 with any of the through-holes 62a in the connecting plate 62, and inserting a locking pin 64 into the matched through-holes 60b and 62a.

As indicated with solid lines in FIGS. 3 and 4, when the locking pin 64 is inserted, the upper frame portion 61 is positioned to cover the upper side of the operator seat 33. Also, when the locking pin 64 is inserted into another through-hole 62a, the upper frame portion 61 can also be fixed in a collapsed state rearward of the vertical column portion 60, as indicated with imaginary lines in FIG. 4. A knob bolt 62b is provided on the front face side of the connecting plate 62, and the vertical column portion 60 and the upper frame portion 61 can be fixed to each other without looseness, using this knob bolt 62b.

In the aforementioned vertical column portion 60, a curved portion 60C, at which an upper portion 60A of the vertical column portion 60 is bent forward relative to a lower portion 60B, is formed at an intermediate position in the up-down direction.

The lower portion 60B, which is a portion on the lower side of the curved portion 60C, is connected and fixed to the body frame 10 in a rearward inclined orientation in which the lower portion 60B is located slightly rearward further toward the upper side when viewed in a side view. The upper portion 60A, which is a portion on the upper side of the curved portion 60C, is installed standing upright on the back side of the operator seat 33 in a substantially vertical orientation when viewed in a side view.

### Reinforcing body

Each vertical column portion 60 is provided with a reinforcing body 7, which includes the curved portion 60C and spans the upper portion 60A and the lower portion 60B.

This reinforcing body 7 includes a first reinforcing member 70 that is fitted from a lateral side of the vertical column portion 60, and a second reinforcing member 71 and third reinforcing member 72, which will be described later.

The first reinforcing member 70 is formed to have a channel-shaped cross section, and includes a lateral face 70a parallel to the front-rear direction of the vertical column portion, a front face 70b parallel to the left-right direction on the front side of the vertical column portion 60, and a rear face 70c parallel to the left-right direction on the rear side of the vertical column portion 60.

The first reinforcing member 70 is constituted by two members divided in the region where the curved portion 60C is located, namely an upper reinforcing member 70A that is on the upper side and a lower reinforcing member 70B that is on the lower side.

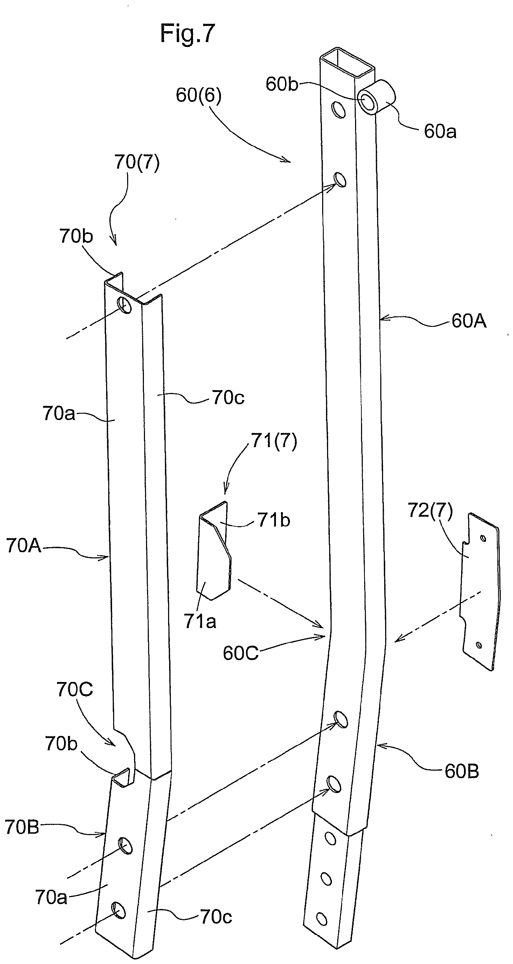

The upper reinforcing member 70A and the lower reinforcing member 70B are in an opposing state in the up-down direction, and a partial cutout portion 70C is formed in a front region of opposing end portions of the upper reinforcing member 70A and the lower reinforcing member 70B (see FIG. 7).

The second reinforcing member 71 is formed to have an L-shaped cross section, and includes a lateral plate 71a that has a face parallel to the front-rear direction on the lateral outer side of the lateral face 70a of the first reinforcing member 70, and a front plate 71b that has a face parallel to the left-right direction on the front side of the front face 70b of the first reinforcing member 70.

In the second reinforcing member 71, out of left and right end portions of the face of the front plate 71b parallel to the left-right direction, the end portion that is distant from the face of the lateral plate 71a parallel to the front-rear direction, i.e. the end face on the machine body inner side, is set as follows. That is to say, the end portion of the front plate 71b on the machine body inner side is located farther from the lateral face 70a of the first reinforcing member 70 parallel to the front-rear direction than the end portion on the machine body inner side of the front face 70b or the rear face 70c of the first reinforcing member 70 parallel to the left-right direction, or than a side face of the vertical column portion 60 on the machine body inner side that is located on the opening side of the channel-shaped cross section of the first reinforcing member 70 (see FIG. 6).

As shown in FIGS. 4 and 7, the lateral plate 71a of the second reinforcing member 71 has a shape substantially similar to the partial cutout portion 70C formed at the opposing end portions of the upper reinforcing member 70A and the lower reinforcing member 70B, and is formed slightly larger than the cutout portion 70C so as to cover the cutout portion 70C from the lateral outer side.

The third reinforcing member 72 is formed to have a flat-plate shape so as to intersect the front plate 71b of the second reinforcing member 71 that has a face parallel to the left-right direction, and to cover the opening side of the channel-shaped cross section of the first reinforcing member 70. The third reinforcing member 72 is constituted by a plate member whose length in the up-down direction is greater than the length of the second reinforcing member 71 in the up-down direction. The third reinforcing member 72 is welded and fixed to the second reinforcing member 71 with a front end thereof abutting against the rear face side of the front plate 71b. Thus, a combined structure of the second reinforcing member 71 and the third reinforcing member 72 is formed to have a channel shape that is open on the rear side when viewed in a plan view.

An example of a method of attaching the reinforcing body 7 that is configured as described above will now be described.

FIG. 6 shows a cross-section in the horizontal direction in the region where the curved portion 60C is present. As shown in FIG. 6, both the left and right side faces of the curved portion 60C of the vertical column portion 60 are slightly deformed in a laterally bulging state, compared with the cross section of the square pipe members other than the curved portion 60C indicated by imaginary lines.

First, the first reinforcing member 70 is placed on a side face of the vertical column portion 60 on the lateral outer side in the area including the curved portion 60 so that the side face of the curved portion 60C on the lateral outer side is covered by the lateral face 70a of the first reinforcing member 70. In this state, the first reinforcing member 70 is welded and fixed to the vertical column portion 60.

Next, the second reinforcing member 71 is placed on an outer side of the first reinforcing member 70 so that the cutout portion 70C is covered, and is temporarily attached to the first reinforcing member 70 and the vertical column portion 60 in this state.

Thereafter, the front end side of the third reinforcing member 72 is placed on the rear face side of the front plate 71b of the second reinforcing member 71, and the third reinforcing member 72 is abutted against the bulging side face, on the lateral inner side, of the curved portion 60C of the vertical column portion 60.

In this state, the third reinforcing member 72 is welded and fixed to the second reinforcing member 71 and the vertical column portion 60, and the second reinforcing member 71 is welded and fixed to the first reinforcing member 70 and the vertical column portion 60.

### Other Embodiments

[1] The above embodiment has described, as an example, a structure of the second reinforcing member 71 that has the front plate 71b having a face parallel to the left-right direction on the front side of the front face 70b of the first reinforcing member 70, and is formed to have an L-shaped cross section. However, the structure of the second reinforcing member 71 is not limited thereto. For example, a structure may be employed in which the second reinforcing member 71 has a plate member with a face parallel to the left-right direction on the rear side of the rear face 70c of the first reinforcing member 70, and has an L-shaped cross section. In this case, it is favorable that a member that covers the cutout portion 70C is provided on the front end side of the third reinforcing member 72.

As for the other configurations, the same configurations as the above embodiment may be employed.

[2] The above embodiment has described a method of attaching the reinforcing body 7 in which the second reinforcing member 71 is placed on and temporarily attached to the outer side of the first reinforcing member 70, and then the third reinforcing member 72 is welded and fixed to the second reinforcing member 71 and the vertical column portion 60. However, the method of attaching the reinforcing body 7 is not limited thereto. For example, a method may be employed in which the third reinforcing member 72 is placed on and temporarily attached to an inner face of the vertical column portion 60, and then the second reinforcing member 71 is welded and fixed to the third reinforcing member 72 and the first reinforcing member 70.

As for the other configurations, the same configurations as the above embodiment may be employed.

[3] Although the above embodiment has described a boarding-type mowing machine as an example of a work machine, the work machine is not limited thereto. The present invention is also applicable to various work machines, such as a tractor and a transport vehicle, that employ a ROPS.

## Claims

1. A work machine comprising:
a body frame (10) that is supported against a ground surface by a front wheel and a rear wheel;
a boarding operation unit (3) that has an operator seat (33) provided on the body frame; and
a ROPS (rollover protection structure) (6) that is installed standing upright on the body frame (10) in the boarding operation unit and has a gate shape when viewed in a front-rear direction, wherein the ROPS includes a pair of left and right vertical column portions (60), and each of the vertical column portions is constituted by a square pipe material having a rectangular cross section, and has a curved portion (60C) at which an upper portion (60A) of the vertical column portion (60) is bent forward relative to a lower portion (60B) thereof, the curved portion being formed at an intermediate position in an up-down direction of the vertical column portion; and
reinforcing bodies (7) each of which spans the upper portion on an upper side of the curved portion and the lower portion on a lower side of the curved portion, wherein each of the reinforcing bodies includes a first reinforcing member (70) that is fitted from a lateral side of a corresponding one of the vertical column portions and has a channel-shaped cross section, a second reinforcing member (71) that has an L-shaped cross section having a face parallel to the front-rear direction of the first reinforcing member, and a face parallel to a left-right direction on a front side or a rear side of the first reinforcing member, and a third reinforcing member (72) having a flat plate shape that intersects the face of the second reinforcing member parallel to the left-right direction and covers an opening side of the channel-shaped cross section of the first reinforcing member.

2. The work vehicle according to claim 1, wherein
the first reinforcing member (70) is constituted by two members (70A,70B) that are divided between the upper side and the lower side of the curved portion (60C).

3. The work vehicle according to claim 1 or 2, wherein
out of left and right end portions of the face (71b) of the second reinforcing member (71) parallel to the left-right direction, an end portion that is distant from the face (71a) parallel to the front-rear direction is located farther from the face (70a) of the first reinforcing member (70) parallel to the front-rear direction than an end portion, on the same side, of the face of the first reinforcing member (70) parallel to the left-right direction, or than a side face of the corresponding vertical column portion (60), the side face being located on an opening side of the channel-shaped cross section of the first reinforcing member (70).

## Patentansprüche

1. Arbeitsmaschine, umfassend:
einen Karosserierahmen (10), der gegen eine Bodenoberfläche von einem Vorderrad und einem Hinterrad abgestützt wird,
eine Einstiegs-Bedienungseinheit (3), die einen Bedienersitz (33) aufweist, der an dem Karosserierahmen vorgesehen ist, und
eine ROPS (rollover protection structure - Überrollschutzstruktur) (6), die aufrecht stehend an dem Karosserierahmen (10) in der Einstiegs-Bedienungseinheit installiert ist und die in Front-Heck-Richtung gesehen eine Torform aufweist, wobei die ROPS ein Paar von linken und rechten vertikalen Säulenabschnitten (60) umfasst, und jeder der vertikalen Säulenabschnitte aus einem Vierkantrohrmaterial besteht, das einen rechteckigen Querschnitt aufweist, und einen gekrümmte Abschnitt (60C) aufweist, an welchem ein oberer Abschnitt (60A) den vertikalen Säulenabschnitt (60) relativ zu einem unteren Abschnitt (60B) davon nach vorne gebogen ist, wobei der gekrümmte Abschnitt an einer Zwischenposition in einer Oben-Unten-Richtung des vertikalen Säulenabschnitts gebildet ist, und
Verstärkungskörper (7), die jeweils den oberen Abschnitt an einer Oberseite des gekrümmten Abschnitts und den unteren Abschnitt an einer Unterseite des gekrümmten Abschnitts überspannen, wobei jeder der Verstärkungskörper ein erstes Verstärkungselement (70), das von einer seitlichen Seite einer entsprechenden der vertikalen Säulenabschnitte her eingepasst ist und das einen kanalförmigen Querschnitt aufweist, ein zweites Verstärkungselement (71), das einen L-förmigen Querschnitt aufweist, der eine Fläche parallel zu der Front-Heck-Richtung des ersten Verstärkungselements und eine Fläche parallel zu einer Links-Rechts-Richtung an einer Vorderseite oder einer Rückseite des ersten Verstärkungselements aufweist, und ein drittes Verstärkungselement (72) umfasst, das eine flache Plattenform aufweist, welche die Fläche des zweiten Verstärkungselements parallel zu der Links-Rechts-Richtung schneidet und eine Öffnungsseite des kanalförmigen Querschnitts des ersten Verstärkungselements abdeckt.

2. Arbeitsfahrzeug nach Anspruch 1, wobei
das erste Verstärkungselement (70) durch zwei Elemente (70A, 70B) gebildet wird, die zwischen der Oberseite und der Unterseite des gekrümmten Abschnitts (60C) geteilt sind.

3. Arbeitsfahrzeug nach Anspruch 1 oder 2, wobei
von linken und rechten Endabschnitten der Fläche (71b) des zweiten Verstärkungselements (71) parallel zu der Links-Rechts-Richtung ein Endabschnitt, der entfernt von der Fläche (71a) parallel zu der Front-Heck-Richtung liegt, sich weiter von der Fläche (70a) des ersten Verstärkungselements (70) parallel zu der Front-Heck-Richtung entfernt befindet als ein Endabschnitt der Fläche des ersten Verstärkungselements (70), an derselben Seite, parallel zu der Links-Rechts-Richtung, oder als eine Seitenfläche des entsprechenden vertikalen Säulenabschnitts (60), wobei die Seitenfläche sich an einer Öffnungsseite des kanalförmigen Querschnitts des ersten Verstärkungselements (70) befindet.

## Revendications

1. Machine de travail comprenant :
un bâti de corps (10) qui est supporté par rapport à une surface de sol par une roue avant et une roue arrière ;
une unité opérationnelle d'embarquement (3) qui a un siège d'opérateur (33) prévu sur le bâti de corps ; et
une ROPS (rollover protection structure - structure de protection contre le renversement) (6) qui est installée droit debout sur le bâti de corps (10) dans l'unité opérationnelle d'embarquement et a une forme de porte lorsqu'elle est observée dans la direction avant - arrière, dans laquelle la ROPS comprend une paire de parties de colonne verticales gauche et droite (60), et chacune des parties de colonne verticales est constituée par un matériau de tuyau carré ayant une section transversale rectangulaire et a une partie incurvée (60C) au niveau de laquelle une partie supérieure (60A) de la partie de colonne verticale (60) est pliée vers l'avant par rapport à sa partie inférieure (60B), la partie incurvée étant formée dans une position intermédiaire dans une direction de haut en bas de la partie de colonne verticale ; et
des corps de renforcement (7) dont chacun couvre la partie supérieure sur un côté supérieur de la partie incurvée et la partie inférieure sur un côté inférieur de la partie incurvée, dans laquelle chacun des corps de renforcement comprend un premier élément de renforcement (70) qui est monté à partir d'un côté latéral d'une partie correspondante des parties de colonne verticales et a une section transversale en forme de canal, un deuxième élément de renforcement (71) qui a une section transversale en forme de L ayant une face parallèle à la direction avant - arrière du premier élément de renforcement, et une face parallèle à une direction gauche - droite sur un côté avant ou un côté arrière du premier élément de renforcement et un troisième élément de renforcement (72) ayant une forme de plaque plate qui coupe la face du deuxième élément de renforcement parallèlement à la direction gauche - droite et couvre un côté d'ouverture de la section transversale en forme de canal du premier élément de renforcement.

2. Véhicule de travail selon la revendication 1, dans lequel :
le premier élément de renforcement (70) est constitué par deux éléments (70A, 70B) qui sont divisés entre le côté supérieur et le côté inférieur de la partie incurvée (60C).

3. Véhicule de travail selon la revendication 1 ou 2, dans lequel :
parmi les parties d'extrémité gauche et droite de la face (71b) du deuxième élément de renforcement (71) parallèle à la direction gauche - droite, une partie d'extrémité qui est distante de la face (71a) parallèle à la direction avant - arrière est positionnée plus loin de la face (70a) du premier élément de renforcement (70) parallèle à la direction avant - arrière qu'une partie d'extrémité, du même côté, de la face du premier élément de renforcement (70) parallèle à la direction gauche - droite, ou qu'une face latérale de la partie de colonne verticale (60) correspondante, la face latérale étant positionnée sur un côté d'ouverture de la section transversale en forme de canal du premier élément de renforcement (70).
